# EUROPÄISCHE PATENTSCHRIFT

(11) **EP 0 388 672 B1**
(45) Veröffentlichungstag und Bekanntmachung des Hinweises auf die Patenterteilung: **24.08.1994**
(21) Anmeldenummer: 90103888.5
(22) Anmeldetag: 28.02.1990
(51) Int. Cl.: H04L 12/28, H04B 3/54

(54) **Verfahren zur Uebermittlung von Datenpaketen**
Method of data packet transfer
Procédé de transfert de paquets de données

(30) Priorität: 21.03.1989 CH 1046/89
(43) Veröffentlichungstag der Anmeldung: 26.09.1990
(73) Patentinhaber: Datawatt BV, NL-8471 ZX Wolvega (NL)
(72) Erfinder: Braun, Walter, Dr., CH-5430 Wettingen (CH); Hagmann, Walter, Dr., CH-5034 Suhr (CH)
(74) Vertreter: Ottow, Jens M., Dr.

(56) Entgegenhaltungen:
- EP-A- 0 231 457
- WO-A-85/03825
- GB-A- 2 176 972

## Beschreibung

### Technische Gebiet

Die Erfindung betrifft ein Verfahren zur Ubermittlung von Datenpaketen in einem Netzwerk mit einer Masterstation, einer oder mehrerer Teilnehmerstation (en) und einem gemeinsamen Datenkanal, bei welchem Verfahren die eine Teilnehmerstation bzw. zumindest eine der mehreren Teilnehmerstationen bei ihr empfangbare Datenpakete und jeweils eine Grösse zum Ermitteln von deren Uebertragungsqualität registriert.

### Stand der Technik

Aus den veröffentlichten Patentanmeldungen EP-A1-0 208 872, EP-A1-0 231 457, EP-A1-0 236 558 und EP-A1-0 238 813 sind Signalübertragungsverfahren bekannt, welche sich speziell für die Datenübertragung auf den Leitungen eines Nieder- und/oder Mittelspannungsnetzes eignen. Sie zeichnen sich dadurch aus, dass sie an die zeit- undfrewuenzabhängigen Störungen des Uebertragungskanals angepasst sind, was in einer stark verbesserten Verfügbarkeit einzelner Datenverbindungen bei gleichzeitiger kleiner Sendeleistung resultiert.

Für die Realisierung eines leittechnischen Systems auf Nieder- und Mittelspannungsnetzen wird aber neben einer möglichst störsicheren Signalübertragung zwischen einem einzelnen Sender und einem Empfänger auch ein Verfahren zur Regelung des Datenaustausches zwischen mehreren Teilnehmern benötigt. Dabei ist insbesondere der orts- und zeitabhängigen Uebertragungssicherheit des gemeinsamen Datenkanals Rechnung zu tragen.

Es ist deshalb in der GB-A-2 176 972 bereits ein netzgebundenes Kommunikationssystem zwischen einer Masterstation und einer Mehrzahl von Fernstationen vorgeschlagen worden, bei dem die einzelne Fernstation anhand von im Netz übertragenen und von ihr empfangenen Nachrichten, die auch Informationen über die Qualität des Uebertragungspfades enthalten, für sich den besten Pfad zur Uebrtragung ihrer Nachricht an die Masterstation auswählt. Da hier das Festlegen der Uebertragungspfade jedoch dezentral durch die einzelnen Teilnehmer bzw. Fernstationen erfolgt, ergeben sich Probleme, wenn ein neuer Teilnehmer in das Netz eingebunden werden soll.

Da aber die Flexibilität des Systems einen wichtigen Punkt darstellt, sollte es möglich sein, das Netzwerk ohne grossen Aufwand erweitern zu können.

### Darstellung der Erfindung

Aufgabe der Erfindung ist es, ein Verfahren zur Übermittlung von Datenpaketen in einem Netzwerk mit einer Masterstation, einer oder mehrerer Teilnehmerstation (en) und einem gemeinsamen Datenkanal zu schaffen, welches bei gleichzeitiger Flexibilität gegenüber Erweiterungen einen zuverlässigen und effizienten Datenaustausch über den mit orts- und zeitabhängigen Störungen behafteten Datenkanal gewährleistet.

Bei einem Verfahren der eingangs genannten Art besteht die Lösung darin,
a) dass die registrierende Teilnehmerstation die registrierten und ermittelten Uebertragungsqualitäten der Masterstation mitteilt,
b) dass die Masterstation aufgrund der ihr mitgeteilten Uebertragungsqualitäten für die registrierende Teilnehmerstationen mindestens ein Datenrouting festlegt,
c) und dass Datenpakete, welche für die registrierende Teilnehmerstation bestimmt sind, gemäss dem festgelegten Datenrouting übermittelt werden.

Um den zeitlichen Aenderungen des Störverhaltens Rechnung zu tragen, werden bei einer bevorzugten Ausführungsform die Teilnehmerstationen in bestimmten, regelmässigen oder unregelmässigen Zeitabständen nach den Uebertragungsqualitäten abgefragt. Zudem überprüft die Masterstation selbst die Uebertragungsqualität zu jeder Teilnehmerstation und ermittelt gegebenenfalls ein neues Datenrouting.

Besonders vorteilhaft ist es, wenn beim Einbinden einer neuen Teilnehmerstation die Masterstation ein Datenpaket übermittelt, welche ein Qualitätsmerkmal für die zwischen Masterstation und neuer Teilnehmerstation liegende Verbindung beinhaltet, und wenn die neue Teilnehmerstation nur dann antwortet, wenn das Qualitätsmerkmal ein gegebenes Kriterium erfüllt.

Die Erfindung wird vorzugsweise für ein leittechnisches System auf Nieder- und/oder Mittelspannungsnetzen verwendet.

Weitere vorteilhafte Ausführungsformen ergeben sich aus den abhängigen Patentansprüchen.

### Kurze Beschreibung der Zeichnung

Nachfolgend soll die Erfindung anhand von Ausführungsbeispielen im Zusammenhang mit der Zeichnung näher erläutert werden. Es zeigen:
- Fig. 1: ein Netzwerk mit einer Masterstation, mehreren Teilnehmerstationen und einem Energieversorgungsnetz als gemeinsamem Datenkanal; und
- Fig. 2: eine logische Verbindungsstruktur in einem Netzwerk mit einer Masterstation und vier Teilnehmerstationen.

Die in der Zeichnung verwendeten Bezugszeichen und deren Bedeutung sind in der Bezeichnungsliste zusammenfassend tabelliert. Grundsätzlich werden für gleiche Teile gleiche Bezugszeichen verwendet.

### Wege zur Ausführung der Erfindung

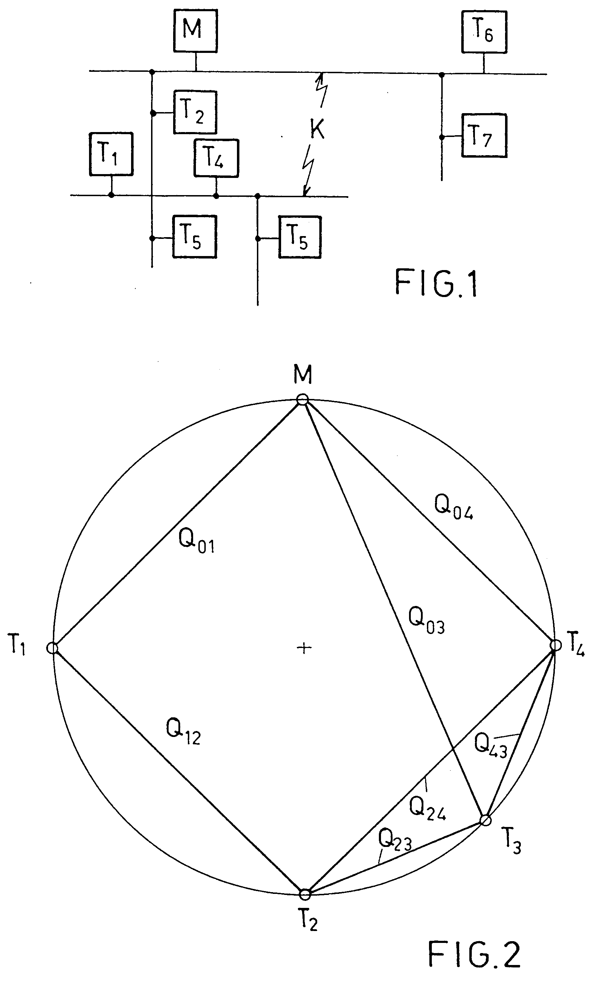

Fig. 1 zeigt ein Netzwerk mit einer Masterstation M und mehreren Teilnehmerstationen T1,..,T7, welche durch einen gemeinsamen Datenkanal K miteinander verbunden sind. Die Masterstation M kontrolliert den Datenaustausch im Netzwerk. Sie gibt Befehle aus und fordert Daten an.

Vorzugsweise wird als Datenkanal ein elektrisches Verteilnetz auf Nieder- und/oder Mittelspannungsebene verwendet. Die Masterstation M und die Teilnehmerstationen T1,..,T7 sind z.B. Sender/Empfängerstationen, welche bei Schaltanlagen und Verbrauchern an die elektrischen Leitungen angekoppelt sind und welche zum Senden und Empfangen von FH/PSK-Signalen (FH = frequency hopping; PSK = phase shift keying) geeignet sind. Es ist dabei nicht nötig, dass alle Stationen auf der gleichen Spannungsebene lokalisiert sind. Ein System, welches sich über beide genannten Spannungsebenen erstreckt ist beispielsweise der eingangs zitierten EP-0,231,457 zu entnehmen. Für Einzelheiten bezüglich Signalübertragung mit FH/PSK-Signalen wird auf die ebenfalls eingangs zitierten veröffentlichten Patentanmeldungen verwiesen.

Die Erfindung hat zum Ziel, in einem solchen Netzwerk die Uebermittlung von Datenpaketen so durchzuführen, dass sie der Charakteristik des Datenkanals möglichst gut angepasst ist. Im folgenden wird nun beschrieben, wie dieses Ziel vorzugsweise erreicht werden kann.

Fig. 2 zeigt ein Beispiel einer logischen Verbindungsstruktur in einem Netzwerk mit einer Masterstation M und vier Teilnehmerstationen T1,..,T4. Jede eingezeichnete Linie stellt eine mögliche, direkte Verbindung dar.

Im vorliegenden Beispiel kann die Masterstation M mit den drei Teilnehmerstationen T1, T3, T4 direkt in Kontakt treten. Zur Teilnehmerstation T2 hingegen existiert keine direkte Verbindung. Da diese Teilnehmerstation T2 jedoch mit allen übrigen Teilnehmerstationen T1, T3, T4 direkt in Verbindung steht, hat die Masterstation die Möglichkeit, eine der drei Teilnehmerstationen T1, T3, T4 als Relais zu benützen und so eine indirekte Verbindung aufzubauen.

Jede direkte Verbindung wird durch ihre Uebertragungsqualität Qij gekennzeichnet. Eine Verbindung muss eine minimale Uebertragungsqualität aufweisen, damit sie als solche in die logische Verbindungsstruktur aufgenommen wird.

Aufgrund der im Netzwerk herrschenden Uebertragungsqualitäten Qij ermittelt die Masterstation für jede Teilnehmerstation zumindest ein Datenrouting. Dieses Datenrouting legt fest, welche Teilnehmerstationen (falls überhaupt) bei der Uebermittlung eines Datenpakets als Relais zu benützen sind.

Im vorliegenden Beispiel läuft die Uebermittlung zwischen Masterstation M und einer der drei Teilnehmerstationen T1, T3, T4 direkt, diejenige zwischen Masterstation M und Teilnehmerstation T2 z.B. über die Teilnehmerstation T3 ab. Ein alternatives Datenrouting könnte beispielsweise über die Teilnehmerstation T1 oder T4 laufen.

Die Uebertragungsqualität wird von jeder Teilnehmerstation laufend überwacht. Falls sie das gegebene Kriterium nicht mehr erfüllt, wird dies der Masterstation mitgeteilt.

Gemäss einer bevorzugten Ausführungsform hört zu diesem Zweck jede Teilnehmerstation den bei ihr empfangbaren Datenverkehr ab, registriert den Absender und als Uebertragungsqualität z.B. das Verhältnis von Signal-zu-Rauschen eines Datenpakets und teilt die entsprechenden Grössen zum gegebenen Zeitpunkt der Masterstation mit.

Alternativ oder ergänzend kann die Masterstation ihrerseits jedes Datenrouting durch ein Qualitätsmerkmal überwachen. Wenn das Qualitätsmerkmal ein gegebenes Kriterium nicht mehr erfüllt, ermittelt die Masterstation unter Berücksichtigung der von den Teilnehmerstationen registrierten Uebertragungqualitäten ein neues Datenrouting.

Eine als Qualitätsmerkmal geeignete Grösse ist die mittlere Anzahl störungsbedingter Wiederholungen eines Datenpakets. Als Kriterium könnte dann eine maximale Zahl von Wiederholungen innerhalb der z.B. letzten hundert, an eine bestimmte Teilnehmerstation übermittelten Datenpakete verwendet werden.

Das erfindungsgemässe Verfahren wird somit durch folgende Schritte charakterisiert:
a) Abhören des laufenden Datenverkehrs und Registrieren der Uebertragungsqualität zur Masterstation und zu den Teilnehmerstationen;
b) Mitteilen der registrierten Uebertragungsqualitäten an die Masterstation;
c) Ermitteln eines oder mehrerer Datenroutings für jede Teilnehmerstation;
d) Uebermitteln von Datenpaketen gemäss dem Datenrouting.

Das erfindungsgemässe Verfahren lässt sich mit Vorteil zum Einbinden von neuen Teilnehmerstationen in das bestehende Netzwerk verwenden. Dies wird im folgenden anhand von Fig. 2 erläutert.

In einem ersten Beispiel sei die Teilnehmerstation T3 neu. Die Masterstation kennt also nur die drei Teilnehmerstationen T1, T2, T4 und tauscht nur mit diesen Datenpakete aus. Die neue Teilnehmerstation T3 hört den laufenden Datenverkehr aber ab und registriert, mit welchen Uebertragungsqualitäten Q03, Q13, Q23, Q43 er die Masterstation M resp. die Teilnehmerstationen T1, T2, T4 empfängt.

Zu bestimmten, regelmässigen oder unregelmässigen Zeitpunkten prüft die Masterstation M, ob neue Teilnehmerstationen ins bestehende Netzwerk einzubinden sind. Zu diesem Zweck macht sie einen Spezialaufruf, welcher sich an alle nicht eingebundenen Teilnehmerstationen richtet.

Mit dem entsprechenden Datenpaket wird ein Qualitätsmerkmal übermittelt, welches die zwischen Masterstation und neuer Teilnehmerstation liegende Verbindung qualifiziert. Eine geeignete Ausführugsform besteht z.B. darin, dass das Qualitätsmerkmal die Uebertragungsqualität der Verbindung charakterisiert, welche zwischen Masterstation und derjenigen Teilnehmerstation herrscht, welche stellvertretend für die Masterstation den Spezialaufruf in einem entlegenen Teil des Netzwerkes durchführt. Die von der Masterstation direkt abgesendeten Spezialaufrufe werden in einem solchen Fall mit einem entsprechend hohen Qualitätsmerkmal gekennzeichnet.

Falls das übermittelte Qualitätsmerkmal ein gegebenes Kriterium erfüllt, antwortet die neue Teilnehmerstation auf den Spezialaufruf und teilt der Masterstation M die registrierten Uebertragungsqualitäten Q03, Q13, Q23, Q43 mit.

Die Masterstation M integriert die neue Teilnehmerstation T3 in die logische Verbindungsstruktur, indem sie basierend auf den Uebertragungsqualitäten Q03, Q13, Q23, Q43 zumindest ein Datenrouting festlegt. Damit ist der Vorgang abgeschlossen.

Falls ein Spezialaufruf des Masterstation unbeantwortet bleibt, gibt es neben dem trivialen Fall, dass eben keine neue Teilnehmerstation einzubinden ist, zwei Möglichkeiten:
- 1.: Das Qualitätsmerkmal erfüllt das gegebene Kriterium nicht, oder
- 2.: die neue Teilnehmerstation hat den Spezialaufruf nicht hören können.

Um diese beiden Fälle behandeln zu können, muss die Masterstation den Spezialaufruf an eine Teilnehmerstation delegieren. Bei einem delegierten Spezialaufruf beinhaltet das Qualitätsmerkmal die Uebertragungsqualität zwischen Masterstation und stellvertretender Teilnehmerstation.

Wenn beispielsweise in Fig. 2 die Teilnehmerstation T2 einzubinden ist, so muss die Masterstation den Spezialaufruf z.B. an die Teilnehmerstation T3 delegieren. Das Qualitätsmerkmal beinhaltet dann die Uebertragungsqualität Q03 der entsprechenden Verbindung. Beim Ueberprüfen des Qualitätsmerkmals kann die neue Teilnehmerstation T2 insbesondere auch die von ihr registrierte Uebertragungsqualität Q23 miteinbeziehen.

Im bestehenden Netzwerk wird jede Teilnehmerstation durch eine kurze Netzwerkadresse identifiziert. Da eine neue Teilnehmerstation noch keine solche hat, antwortet sie auf einen Spezialaufruf vorzugsweise mit einer global einmaligen, und damit entsprechend langen Seriennummer. Sobald sie dann eine Netzwerkadresse hat, beachtet sie die in regelmässigen oder unregelmässigen Zeitabständen ausgesandten Spezialaufrufe zum Einbinden nicht mehr.

Abschliessend kann gesagt werden, dass die Erfindung ein flexibles Verfahren zum effizienten Uebermitteln von Datenpaketen schafft, welches sich besonders für leittechnische Systeme auf Nieder- und/oder Mittelspannungsnetzen eignet.

### BEZEICHNUNGSLISTE

- M: Masterstation
- T1,T2,T3,T4: Teilnehmerstation
- K: Datenkanal
- Q01,Q02, ..: Uebertragungsqualität

## Patentansprüche

1. Verfahren zur Uebermittlung von Datenpaketen in einem Netzwerk mit einer Masterstation, einer oder mehreren Teilnehmerstationen und einem gemeinsamen Datenkanal, bei welchem Verfahren die eine Teilnehmerstation bzw. zumindest eine der mehreren Teilnehmerstationen bei ihr empfangbare Datenpakete und jeweils eine Grösse zum Ermitteln von deren Uebertragungsqualität registriert, dadurch gekennzeichnet,
a) dass die registrierende Teilnehmerstation die registrierten und ermittelten Uebertragungsqualitäten der Masterstation mitteilt,
b) dass die Masterstation aufgrund der ihr mitgeteilten Uebertragungsqualitäten für die registrierende Teilnehmerstationen mindestens ein Datenrouting festlegt,
c) und dass Datenpakete, welche für die registrierende Teilnehmerstation bestimmt sind, gemäss dem festgelegten Datenrouting übermittelt werden.

2. Verfahren nach Anspruch 1, dadurch gekennzeichnet, dass jede Teilnehmerstation die jeweils bei irh empfangbaren Datenpakete und deren Uebertragungsqualität registriert und der Masterstation übermittelt.

3. Verfahren nach Anspruch 2, dadurch gekennzeichnet, dass jede Teilnehmerstation laufend die Uebertragungsqualität registriert, und dass das Datenrouting erneuert wird, wenn die Uebertragungsqualität ein gegebenes Qualitätskriterium nicht erfüllt.

4. Verfahren nach Anspruch 3, dadurch gekennzeichnet, dass die Masterstation die Uebertragungsqualität von Zeit zu Zeit überprüft.

5. Verfahren nach Anspruch 4, dadurch gekennzeichnet, dass die Uebertragungsqualität anhand einer mittleren Anzahl von störungsbedingten Wiederholungen überprüft wird.

6. Verfahren nach Anspruch 1, dadurch gekennzeichnet, dass die Uebertragungsqualität mit Hilfe des Verhältnisses von Signal-zu-Rauschen ermittelt wird.

7. Verfahren nach Anspruch 1, dadurch gekennzeichnet, dass
a) eine neu ins Netzwerk einzubindende Teilnehmerstation die bei ihr empfangbaren Datenpakete und eine Grösse zum Ermitteln deren Uebertragungsqualität registriert,
b) zum Einbinden der neuen Teilnehmerstation die Masterstation einen Spezialaufruf absendet, welcher ein Qualitätsmerkmal für die zwischen Masterstation und neuer Teilnehmerstation liegende Verbindung beinhaltet, und
c) dass diese neue Teilnehmerstation auf den Spezialaufruf nur dann antwortet und die registrierten Uebertragungsqualitäten der Masterstation nur dann mitteilt, wenn das Qualitätsmerkmal ein gegebenes Kriterium erfüllt.

8. Verfahren nach Anspruch 7, dadurch gekennzeichnet, dass die Masterstation zu bestimmten, regelmässigen oder unregelmässigen Zeitpunkten die Spezialaufrufe zum Einbinden neuer Teilnehmerstationen wiederholt.

9. Verfahren nach Anspruch 1, dadurch gekennzeichnet, dass als gemeinsamer Datenkanal die Leitungen eines elektrischen Energieverteilungsnetzes auf der Nieder- und Mittelspannungsebene verwendet werden.

10. Verfahren nach Anspruch 1, dadurch gekennzeichnet, dass für den Datenaustausch FH/PSK-Signale eingesetzt werden.

## Claims

1. Method for the transfer of data packets in a network having a master station, one or more subscriber stations and a common data channel, in which one subscriber station or at least one of the several subscriber stations records the data packets which it can receive and in each case one quantity for determining the transmission quality thereof, characterized in that
a) the recording subscriber station communicates the recorded and determined transmission qualities to the master station,
b) that the master station fixes at least one data routing for the recording subscriber stations on the basis of the transmission qualities communicated to it,
c) and that data packets, which are determined for the recording subscriber station, are transferred in accordance with the fixed data routing.

2. Method according to claim 1, characterized in that each subscriber station records the data packets which it can receive and their transmission quality and transfers the same to the master station.

3. Method according to claim 2, characterized in that each subscriber station continuously records the transmission quality and that the data routing is renewed if the transmission quality does not fulfil a given quality criterion.

4. Method according to claim 3, characterized in that every so often the master station checks the transmission quality.

5. Method according to claim 4, characterized in that the transmission quality is checked by means of an average number of interference-caused repeats.

6. Method according to claim 1, characterized in that the transmission quality is determined with the aid of the signal-to-noise ratio.

7. Method according to claim 1, characterized in that
a) a new subscriber station to be bound into the network records the data packets which it can receive and a quantity for determining their transmission quality,
b) for binding in the new subscriber station the master station emits a special call, which contains a quality feature for the connection between the master station and the new subscriber station and
c) that said new subscriber station only answers the special call and only communicates the recorded transmission qualities to the master station if the quality feature fulfils a given criterion.

8. Method according to claim 7, characterized in that at specific, regular or irregular times, the master station repeats the special calls for binding in new subscriber stations.

9. Method according to claim 1, characterized in that as a common data channel are used the lines of an electric energy distribution network on the low and medium voltage plane.

10. Method according to claim 1, characterized in that FH/PSK signals are used for the data exchange.

## Revendications

1. Méthode de transmission de paquets de données dans un réseau ayant une station maîtresse, un ou plusieurs postes d'abonné et un canal de données commun, méthode dans laquelle ledit poste d'abonné ou au moins l'un du nombre de postes d'abonné enregistre des paquets de données qu'il peut recevoir et dans chaque cas une quantité pour déterminer leur qualité de transmission, caractérisée en ce que
a) le poste d'abonné d'enregistrement communique les qualités de transmission enregistrées et déterminées à la station maîtresse,
b) la station maîtresse détermine au moins une route de données pour les postes d'abonné d'enregistrement en fonction des qualités de transmission qui lui ont été communiquées,
c) et les paquets de données qui sont destinés au poste d'abonné d'enregistrement sont transmis conformément à la route de données déterminée.

2. Méthode selon la revendication 1, caractérisée en ce que chaque poste d'abonné enregistre les paquets de données qu'il peut recevoir dans chaque cas, et leur qualité de transmission, et les transmet à la station maîtresse.

3. Méthode selon la revendication 2, caractérisée en ce que chaque poste d'abonné enregistre en permanence la qualité de transmission et en ce que la route de données est revue si la qualité de transmission ne satisfait pas à un critère de qualité donné.

4. Méthode selon la revendication 3, caractérisée en ce que la station maîtresse vérifie de temps à autre la qualité de transmission.

5. Méthode selon la revendication 4, caractérisée en ce que la qualité de transmission est vérifiée au moyen d'un nombre moyen de retransmissions occasionnées par des perturbations.

6. Méthode selon la revendication 1, caractérisée en ce que la qualité de transmission est déterminée à l'aide du rapport signal/bruit.

7. Méthode selon la revendication 1, caractérisée en ce que
a) un poste d'abonné devant être nouvellement incorporé au réseau enregistre les paquets de données qu'il peut recevoir et une quantité pour déterminer leur qualité de transmission,
b) dans le but d'incorporer le nouveau poste d'abonné, la station maîtresse transmet un appel spécial qui contient une caractéristique de qualité pour la connexion située entre la station maîtresse et le nouveau poste d'abonné, et
c) ce nouveau poste d'abonné ne répond qu'à l'appel spécial, et ne communique que les qualités de transmission enregistrées à la station maîtresse, si la caractéristique de qualité satisfait à un critère donné.

8. Méthode selon la revendication 7, caractérisée en ce que la station maîtresse répète les appels spéciaux pour incorporer de nouveaux postes d'abonnés à des intervalles particuliers réguliers ou irréguliers.

9. Méthode selon la revendication 1, caractérisée en ce que les lignes du système de distribution du réseau électrique au niveau de basse tension et de moyenne tension sont utilisées comme canal de données commun.

10. Méthode selon la revendication 1, caractérisée en ce que les signaux SF/MDP sont utilisés pour l'échange de données.
